# EUROPEAN PATENT SPECIFICATION

(11) **EP 3 093 586 B1**
(45) Date of publication and mention of the grant of the patent: **25.08.2021**
(21) Application number: 13896707.0
(22) Date of filing: 29.10.2013
(51) Int. Cl.: F25B 47/02, F24F 5/00, F25B 13/00, F25B 49/02

(54) **AIR CONDITIONING DEVICE**
KLIMAANLAGENVORRICHTUNG
DISPOSITIF DE CLIMATISATION

(43) Date of publication of application: 16.11.2016
(73) Proprietor: Mitsubishi Electric Corporation, Tokyo 100-8310 (JP)
(72) Inventor: MATSUI, Ryosuke, Tokyo 100-8310 (JP); TANAKA, Kosuke, Tokyo 100-8310 (JP); TAMURA, Naomichi, Tokyo 100-8310 (JP); ARIYAMA, Tadashi, Tokyo 100-8310 (JP)
(74) Representative: Pfenning, Meinig & Partner mbB
(86) International application number: PCT/JP2013/079183
(87) International publication number: WO 2015/063846

(56) References cited:
- EP-A1- 2 615 388
- EP-A2- 2 574 866
- JP-A- H06 300 381
- JP-A- H10 232 056
- JP-A- H10 253 201
- JP-A- S54 131 156
- JP-A- 2005 042 943
- JP-A- 2006 275 449
- JP-A- 2008 025 904
- JP-A- 2008 096 033
- None

## Description

### Technical Field

The present invention relates to an air-conditioning apparatus including a plurality of heat source units.

### Background Art

Patent Literature 1 discloses an air-conditioning apparatus capable of heating an air-conditioned room even in a defrosting operation. This air-conditioning apparatus includes a compressor, a heat source side heat exchanger, a use side heat exchanger, a heat exchanger for heat storage, a switching mechanism, a first branch pipe, and a refrigerant storage container. The switching mechanism can switch between a heating and heat storage condition in which the use side heat exchanger and the heat exchanger for heat storage are each caused to function as a condenser, and in which the heat source side heat exchanger is caused to function as an evaporator, and a stored heat usage defrosting condition in which the heat source side heat exchanger is caused to function as a condenser, and in which the heat exchanger for heat storage is caused to function as an evaporator. The first branch pipe branches off from a refrigerant pipe connecting the compressor and the heat source side heat exchanger, leads, in the stored heat usage defrosting condition, part of refrigerant discharged from the compressor to the use side heat exchanger, and causes the use side heat exchanger to function as a condenser.

Furthermore, Patent Literature 2 discloses an air-conditioning apparatus including a plurality of heat source units and at least one or more indoor units. The heat source units and the indoor units are connected via a flow switching valve device that brings a predetermined connection pipe into a low-pressure state and brings another predetermined connection pipe into a high-pressure state at all times in operation. In this air-conditioning apparatus, when it is detected that any one of the heat source units is in a frost formation state, a switching valve included in a heat source unit in which frost formation has been detected is reversed, refrigerant discharged from a compressor is caused to flow into a heat source side heat exchanger included in this heat source unit, and thus a defrosting operation is performed. At the same time, a stream of the refrigerant having flowed out of this heat source side heat exchanger and a stream of refrigerant discharged from a compressor included in another heat source unit in which no frost formation has been detected are merged, and thus a heating operation is continued.

EP 2574866 A2 discloses an air conditioning apparatus including first start control and second start control as its start control. In the first start control, first outdoor heat exchangers are controlled to function as evaporators and second outdoor heat exchangers are controlled to function as condensers. Thus, even when the compressors are driven on at a given rotation number, the discharge pressures thereof can be prevented from increasing, thereby being able to prevent the internal pressures of the compressors from increasing. Also, after end of the first start control, the first outdoor heat exchangers and second outdoor heat exchangers are all controlled to function as evaporators, and the compressors are driven on at a given rotation number. This can shorten the rising time of the heating capacity in the start of the normal heating operation. The air-conditioning apparatus comprises a plurality of heat source units, at least one indoor unit including an indoor heat exchanger and an indoor expansion valve, a main circuit, a heat circuit connected to the main circuit in parallel with the indoor heat exchanger and the indoor expansion valve, a heat transfer circuit, and a plurality of hot gas bypass circuits.

JP 2008 096033 A discloses a refrigerating device forming a refrigerating cycle provided with a hot gas bypass passage connecting a discharge side of a compressor and an upstream side of an evaporator. A defrost controlling means switches a four-way valve to perform an inverse cycle defrosting operation when the defrosting of the evaporator is detected, and switches the four-way valve to a normal cycle side when the piping heat storage amount detected by a heat storage amount detecting means becomes less than a set value, and opens the hot gas bypass opening arid closing valve to perform a hot gas bypass defrosting operation.

EP 2 615 388 A1 discloses an air conditioner that includes an outdoor heat exchanger, an indoor heat exchanger, a four-way valve, and a compressor. Frost deposited on the outdoor heat exchanger is melted by refrigerant heated by the compressor by selecting either a heating cycle or a cooling cycle on the basis of the indoor wall temperature detected by an indoor wall temperature detecting means and when defrosting is required, controlling the four-way valve so as to allow the selected cycle to be performed.

JP S54 131156 A discloses a defroster for freezers comprising a first, second and a third solenoid valves. When the first and second solenoid valves are opened, a third solenoid valve is closed, and the change-over of a three-way change-over valve is made to a hot gas bypass pipe side, high-temperature, high pressure discharge gas refrigerant passes through a short circuit pipe, and absorbs the liquid refrigerant contained in a condenser and a liquid receiver at the connection of an ejector and the obtained gas-liquid mixture starts defrosting after flowing in an evaporator.

### Citation List

### Patent Literature

Patent Literature 1: Japanese Patent No. 4457755
Patent Literature 2: Japanese Patent No. 4948016

### Summary of Invention

### Technical Problem

In the air-conditioning apparatus disclosed in Patent Literature 1, heat stored in a heat storage material in the heating and heat storage condition is transferred in the stored heat usage defrosting condition, and a heating operation is thereby continued. In the heating and heat storage condition, however, while a heating operation is being performed, heat has to be stored in the heat storage material by the amount of heat enough to maintain heating capacity in the stored heat usage defrosting condition. For this reason, a large heat source unit has to be connected that has high power with respect to the capacity of an indoor unit to be connected. In particular, in a multi-heat source unit system including a plurality of heat source units, there is a problem in that an increase in the size of each heat source unit greatly restricts installation space of the heat source units.

Furthermore, in the air-conditioning apparatus disclosed in Patent Literature 2, to maintain heating capacity when a defrosting operation of one of the heat source units is performed, a heat source unit having such a high capacity that the capacity of the one heat source unit in defrosting operation is supplemented has to be connected. For this reason, the size of each heat source unit is increased, and there is a problem in that an increase in the size of the heat source unit greatly restricts installation space of the heat source units.

The present invention has been accomplished to solve the above-described problems, and an object thereof is to provide an air-conditioning apparatus that can perform a defrosting operation while performing a heating operation, and includes a reduced size of a heat source unit.

### Solution to Problem

The object of the present invention is solved by claim 1. Advantageous embodiments are described by the dependent claims.

### Advantageous Effects of Invention

According to the present invention, the first heating and defrosting operation in which a defrosting operation of the first heat source unit is performed while a heating operation is being performed, and the second heating and defrosting operation in which a defrosting operation of the second heat source unit is performed while a heating operation is being performed are sequentially performed with the heating and heat storage operation in between, thus enabling a reduction in necessary defrosting capacity during one heating and defrosting operation. For this reason, the necessary amount of heat to be transferred can be reduced, and thus enabling a reduction in the capacity of the compressor of each heat source unit. Hence, there can be provided the air-conditioning apparatus that can perform a defrosting operation while performing a heating operation, and includes a reduced size of the heat source unit.

### Brief Description of Drawings

[Fig. 1] Fig. 1 is a refrigerant circuit diagram illustrating a refrigerant circuit configuration of an air-conditioning apparatus according to Embodiment 1 of the present invention.
[Fig. 2] Fig. 2 illustrates the flow of refrigerant in a heating and heat storage operation in the air-conditioning apparatus according to Embodiment 1 of the present invention.
[Fig. 3] Fig. 3 illustrates the flow of refrigerant in a first heating and defrosting operation (OC1 defrosting) in the air-conditioning apparatus according to Embodiment 1 of the present invention.
[Fig. 4] Fig. 4 illustrates the flow of refrigerant in a second heating and defrosting operation (OC2 defrosting) in the air-conditioning apparatus according to Embodiment 1 of the present invention.
[Fig. 5] Fig. 5 includes diagrams illustrating effects of the air-conditioning apparatus according to Embodiment 1 of the present invention.

### Description of Embodiments

### Embodiment 1

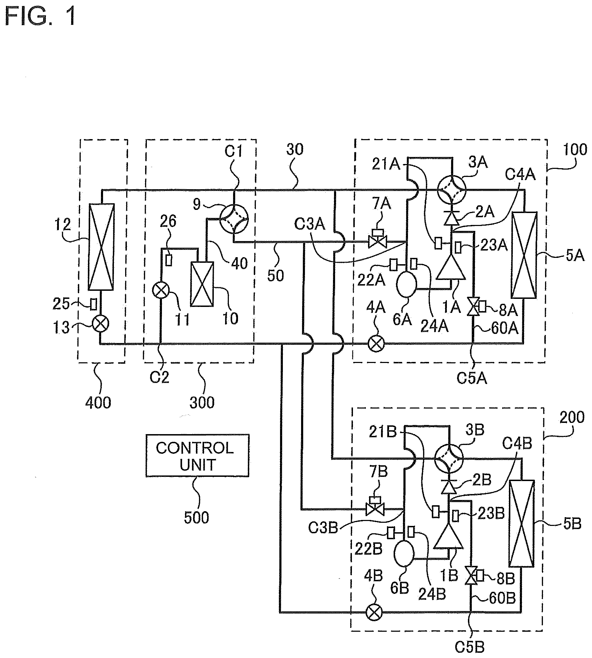

An air-conditioning apparatus according to Embodiment 1 of the present invention will be described. Fig. 1 is a refrigerant circuit diagram illustrating a refrigerant circuit configuration of the air-conditioning apparatus according to Embodiment 1. As illustrated in Fig. 1, the air-conditioning apparatus according to Embodiment 1 is a multi-heat source unit system using stored heat that includes a plurality of heat source units 100 and 200 (Fig. 1 illustrates two heat source units 100 and 200) connected in parallel to each other, at least one indoor unit 400 (Fig. 1 illustrates one indoor unit 400), and a heat storage system 300 connected in parallel with the indoor unit 400. In the following description, the heat source unit 100 and the heat source unit 200 may be referred to as an OC1 and an OC2, respectively.

A refrigerant circuit of the air-conditioning apparatus includes a main circuit 30, a heat storage circuit 40, a heat transfer circuit 50, and hot gas bypass circuits 60A and 60B. In the main circuit 30, compressors 1A and 1B, four-way valves 3A and 3B, an indoor heat exchanger 12, an indoor expansion valve 13, heat source side expansion valves 4A and 4B, heat source side heat exchangers 5A and 5B, and accumulators 6A and 6B are connected in that order in a circle.

The compressors 1A and 1B are each a fluid machine that sucks refrigerant, compresses the sucked refrigerant, and discharges the refrigerant. The four-way valves 3A and 3B each switch the flow of refrigerant in a heating operation and the flow of refrigerant in a cooling operation. The indoor heat exchanger 12 functions as a condenser in a heating operation, and functions as an evaporator in a cooling operation. The indoor expansion valve 13 and the heat source side expansion valves 4A and 4B each reduce the pressure of and expand refrigerant. As the indoor expansion valve 13 and the heat source side expansion valves 4A and 4B, electronic expansion valves whose opening degrees can be controlled and adjusted by a control unit 500 to be described are used. The heat source side heat exchangers 5A and 5B each function as an evaporator in a heating operation, and each function as a condenser in a cooling operation. The heat source side heat exchangers 5A and 5B each also function as a condenser in defrosting. The accumulators 6A and 6B each separate refrigerant into gas and liquid, cause the compressors 1A and 1B to suck only gas refrigerant, and also store excess of refrigerant in the refrigerant circuit.

The compressor 1A, the four-way valve 3A, the heat source side expansion valve 4A, the heat source side heat exchanger 5A, and the accumulator 6A are provided in the heat source unit 100. In the heat source unit 100, a check valve 2A that allows only a flow in a direction from the compressor 1A toward the four-way valve 3A and prevents the backflow of refrigerant while the compressor 1A is stopped is provided between the compressor 1A and the four-way valve 3A (on a discharge side of the compressor 1A). A high pressure sensor 21A that detects the pressure of refrigerant discharged from the compressor 1A, and a discharge temperature sensor 23A that detects the temperature of the discharged refrigerant (in this example, the temperature of a refrigerant pipe from which the temperature of the discharged refrigerant can be estimated) are provided on an outlet pipe of the compressor 1A. Furthermore, a low pressure sensor 22A that detects the pressure of refrigerant to be sucked and a suction temperature sensor 24A that detects the temperature of the refrigerant to be sucked (in this example, the temperature of a refrigerant pipe from which the temperature of the refrigerant to be sucked can be estimated) are provided on an inlet pipe of the accumulator 6A.

The compressor 1B, the four-way valve 3B, the heat source side expansion valve 4B, the heat source side heat exchanger 5B, and the accumulator 6B are provided in the heat source unit 200. As in the heat source unit 100, in the heat source unit 200, a check valve 2B, a high pressure sensor 21B, a discharge temperature sensor 23B, a low pressure sensor 22B, and a suction temperature sensor 24B are provided.

The indoor heat exchanger 12 and the indoor expansion valve 13 are provided in the indoor unit 400. In the indoor unit 400, a temperature sensor 25 that detects the temperature of refrigerant (in this example, the temperature of a refrigerant pipe from which the temperature of the refrigerant can be estimated) is provided between the indoor heat exchanger 12 and the indoor expansion valve 13.

The heat storage circuit 40 is connected between a connection point C1 provided between the four-way valves 3A and 3B and the indoor heat exchanger 12 that are included in the main circuit 30 and a connection point C2 provided between the indoor expansion valve 13 and the heat source side expansion valves 4A and 4B that are included in the main circuit 30, and is provided to the main circuit 30 in parallel with the indoor heat exchanger 12 and the indoor expansion valve 13. In the heat storage circuit 40, in an order starting from a connection point C1 side, a four-way valve 9 (an example of a flow switching unit), a heat storage heat exchanger 10, and a heat storage expansion valve 11 are connected. The four-way valve 9 switches between flow passages, forms a flow passage connecting the heat storage circuit 40 and the main circuit 30 in heat storage at which heat is stored in the heat storage heat exchanger 10 (in a heating and heat storage operation to be described), and forms a flow passage connecting the heat storage circuit 40 and the heat transfer circuit 50 in heat transfer at which heat is transferred from the heat storage heat exchanger 10 (in a first heating and defrosting operation or a second heating and defrosting operation to be described). The heat storage heat exchanger 10 is provided in a heat storage tank, which is not illustrated, that stores heating energy, and exchanges heat between refrigerant flowing through the heat storage circuit 40 and a heat storage material in the heat storage tank. Examples of a heat storage material used include a latent heat storage material, a sensible heat storage material, and a chemical heat storage material. At least in the heating and heat storage operation to be described, the heat storage heat exchanger 10 and the heat storage expansion valve 11 are connected in parallel with the indoor heat exchanger 12 and the indoor expansion valve 13. A temperature sensor 26 that detects the temperature of refrigerant (in this example, the temperature of a refrigerant pipe from which the temperature of the refrigerant can be estimated) is provided between the heat storage heat exchanger 10 and the heat storage expansion valve 11. The four-way valve 9, the heat storage heat exchanger 10, the heat storage expansion valve 11, and the temperature sensor 26 are provided in the heat storage system 300.

The heat transfer circuit 50 is connected between the four-way valve 9 included in the heat storage circuit 40 and connection points C3A and C3B provided between the four-way valves 3A and 3B and the accumulators 6A and 6B that are included in the main circuit 30 (on inlet sides of the accumulators 6A and 6B). A low pressure solenoid valve 7A (an example of an first opening and closing unit) is provided between the four-way valve 9 and the connection point C3A, and a low pressure solenoid valve 7B (an example of an first opening and closing unit) is provided between the four-way valve 9 and the connection point C3B. The low pressure solenoid valves 7A and 7B are respectively provided for the heat source units 100 and 200. As described later, the low pressure solenoid valve 7A is in an open state only in defrosting of the heat source unit 100, and the low pressure solenoid valve 7B is in an open state only in defrosting of the heat source unit 200.

The hot gas bypass circuits 60A and 60B are respectively provided for the heat source units 100 and 200. The hot gas bypass circuits 60A and 60B are respectively connected between connection points C4A and C4B respectively provided on outlet pipes of the compressors 1A and 1B (on discharge sides of the compressors 1A and 1B and on upstream sides of the check valves 2A and 2B) and connection points C5A and C5B respectively provided between the heat source side expansion valves 4A and 4B and the heat source side heat exchangers 5A and 5B. In the hot gas bypass circuits 60A and 60B, hot gas bypass solenoid valves 8A and 8B (examples of second opening and closing units) are respectively provided. The hot gas bypass solenoid valves 8A and 8B each also function, in an open state, as a pressure reducing valve that reduces the pressure of refrigerant flowing therethrough.

Refrigerant circulating in the refrigerant circuit is not limited to particular refrigerant. For example, natural refrigerants, such as carbon dioxide, hydrocarbons, and helium, or refrigerants, such as R410A, R32, R407C, R404A, and HFO1234yf can be used.

The control unit 500 is a microcomputer including a CPU, a ROM, a RAM, an input and output port, and other elements. The control unit 500 controls actions of the compressors 1A and 1B, the four-way valves 3A and 3B, the heat source side expansion valves 4A and 4B, the low pressure solenoid valves 7A and 7B, the hot gas bypass solenoid valves 8A and 8B, the four-way valve 9, the heat storage expansion valve 11, the indoor expansion valve 13, and other elements on the basis of signals detected from the high pressure sensors 21A and 21B, the low pressure sensors 22A and 22B, the discharge temperature sensors 23A and 23B, the suction temperature sensors 24A and 24B, the temperature sensors 25 and 26, and other sensors.

Next, actions of the air-conditioning apparatus according to Embodiment 1 will be described. The air-conditioning apparatus according to Embodiment 1 can perform at least "heating and heat storage operation" in which a heat storage operation is performed while a heating operation is being performed, at least "first heating and defrosting operation (OC1 defrosting)" in which a defrosting operation of the heat source unit 100 is performed while a heating operation is being performed, and at least "second heating and defrosting operation (OC2 defrosting)" in which a defrosting operation of the heat source unit 200 is performed while a heating operation is being performed.

### [Actions in Heating and Heat Storage Operation]

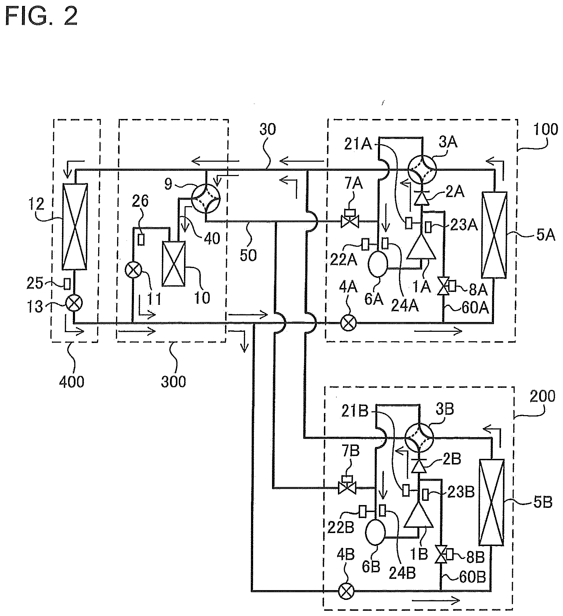

First, actions in a heating and heat storage operation in which a heat storage operation is performed while a heating operation is being performed will be described. Fig. 2 illustrates the flow of refrigerant in the heating and heat storage operation in the air-conditioning apparatus according to Embodiment 1. In the heating and heat storage operation, the expansion valves, the solenoid valves, the four-way valves, and other valves work as described below under control of the control unit 500 (not illustrated in Figs. 2 to 4).

The indoor expansion valve 13 is controlled so that a degree of subcooling of refrigerant at an outlet of the indoor heat exchanger 12 approaches a target value. The degree of subcooling of the refrigerant at the outlet of the indoor heat exchanger 12 is obtained by using refrigerant pressures detected by the high pressure sensors 21A and 21B, and a refrigerant temperature estimated from a pipe temperature detected by the temperature sensor 25.

The heat storage expansion valve 11 is controlled so that a degree of subcooling of refrigerant at an outlet of the heat storage heat exchanger 10 approaches a target value. The degree of subcooling of the refrigerant at the outlet of the heat storage heat exchanger 10 is obtained by using refrigerant pressures detected by the high pressure sensors 21A and 21B, and a refrigerant temperature estimated from a pipe temperature detected by the temperature sensor 26. Note that, if a heating load is large or if an indoor temperature is low, the target value of the degree of subcooling is set to a small value so that the amount of heat stored in the heat storage system 300 is increased.

The heat source side expansion valve 4A is controlled so that a degree of superheat of refrigerant at an inlet of the accumulator 6A approaches a target value. The degree of superheat of the refrigerant at the inlet of the accumulator 6A is obtained by using a refrigerant pressure detected by the low pressure sensor 22A and a refrigerant temperature estimated from a pipe temperature detected by the suction temperature sensor 24A.

The heat source side expansion valve 4B is controlled so that a degree of superheat of refrigerant at an inlet of the accumulator 6B approaches a target value. The degree of superheat of the refrigerant at the inlet of the accumulator 6B is obtained by using a refrigerant pressure detected by the low pressure sensor 22B and a refrigerant temperature estimated from a pipe temperature detected by the suction temperature sensor 24B.

The low pressure solenoid valves 7A and 7B, and the hot gas bypass solenoid valves 8A and 8B are each controlled to be in a closed state. The four-way valves 3A and 3B are set so that flow passages through which high-pressure gas refrigerant discharged from the compressor 1A and high-pressure gas refrigerant discharged from the compressor 1B flow into the indoor heat exchanger 12 are formed, and so that flow passages through which low-pressure gas refrigerant having flowed out of the heat source side heat exchanger 5A and low-pressure gas refrigerant having flowed out of the heat source side heat exchanger 5B are sucked into the compressors 1A and 1B are formed. The four-way valve 9 is set so that a flow passage through which the high-pressure gas refrigerant discharged from the compressors 1A and 1B flows into the heat storage heat exchanger 10, and through which the refrigerant having flowed out of the heat storage heat exchanger 10 and having passed through the heat storage expansion valve 11 flows into the heat source side expansion valves 4A and 4B is formed.

In the heating and heat storage operation, streams of the high-pressure high-temperature gas refrigerant discharged from the compressors 1A and 1B pass through the respective four-way valves 3A and 3B, and merge into a combined stream once. The combined high-pressure gas refrigerant stream is divided into a stream flowing through a flow passage toward the indoor heat exchanger 12 of the indoor unit 400 and a stream flowing through a flow passage toward the heat storage heat exchanger 10 of the heat storage system 300 (the heat storage circuit 40). The high-pressure gas refrigerant of the divided stream flowing through the flow passage toward the indoor heat exchanger 12 is condensed by heat exchange with indoor air in the indoor heat exchanger 12 to turn into high-pressure liquid refrigerant. At this time, the indoor air is heated by heat exchange with the refrigerant to turn into warm air. The high-pressure liquid refrigerant having flowed out of the indoor heat exchanger 12 is reduced in pressure by the indoor expansion valve 13 to turn into medium-pressure two-phase refrigerant. Here, the medium pressure refers to a pressure that is lower than a high-pressure side pressure (the pressure in a condenser) and higher than a low-pressure side pressure (the pressure in an evaporator) in a refrigeration cycle. On the other hand, the high-pressure gas refrigerant of the divided stream flowing through the flow passage toward the heat storage heat exchanger 10 is condensed by heat exchange with the heat storage material in the heat storage heat exchanger 10 to turn into high-pressure liquid refrigerant. At this time, the heat storage material stores heat received from the refrigerant. The high-pressure liquid refrigerant having flowed out of the heat storage heat exchanger 10 is reduced in pressure by the heat storage expansion valve 11 to turn into medium-pressure two-phase refrigerant.

A stream of the medium-pressure two-phase refrigerant whose pressure has been reduced by the indoor expansion valve 13 and a stream of the medium-pressure two-phase refrigerant whose pressure has been reduced by the heat storage expansion valve 11 merge into a combined stream once, and the combined stream is divided into a stream flowing through a flow passage toward the heat source unit 100 and a stream flowing through a flow passage toward the heat source unit 200. The medium-pressure two-phase refrigerant of the divided stream flowing through the flow passage toward the heat source unit 100 is reduced in pressure by the heat source side expansion valve 4A to turn into low-pressure two-phase refrigerant, and evaporates in the heat source side heat exchanger 5A to turn into low-pressure gas refrigerant. This low-pressure gas refrigerant is sucked into the compressor 1A through the four-way valve 3A and the accumulator 6A. On the other hand, the medium-pressure two-phase refrigerant of the divided stream flowing through the flow passage toward the heat source unit 200 is reduced in pressure by the heat source side expansion valve 4B to turn into low-pressure two-phase refrigerant, and evaporates in the heat source side heat exchanger 5B to turn into low-pressure gas refrigerant. This low-pressure gas refrigerant is sucked into the compressor 1B through the four-way valve 3B and the accumulator 6B.

In the heating and heat storage operation, the indoor heat exchanger 12 and the heat storage heat exchanger 10 each function as a condenser, and the heat source side heat exchangers 5A and 5B each function as an evaporator. For this reason, a heat storage operation can be performed while a heating operation is being performed.

### [Actions in First Heating and Defrosting Operation (OC1 Defrosting)]

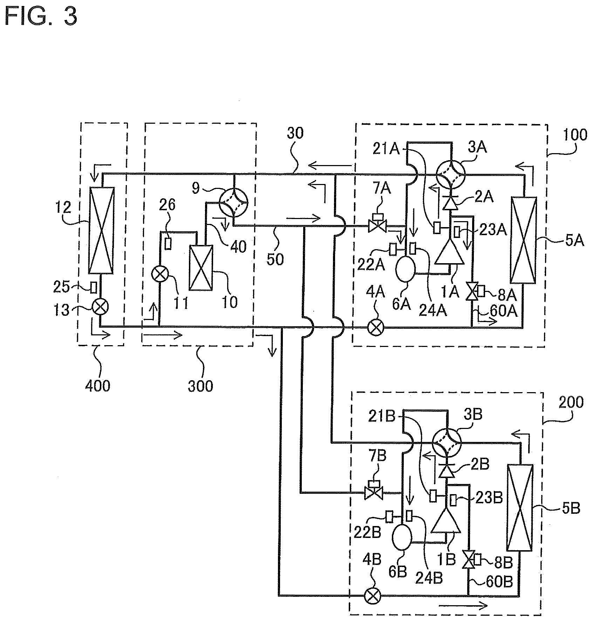

Next, actions in a first heating and defrosting operation (OC1 defrosting) in which a defrosting operation of the heat source unit 100 is performed while a heating operation is being performed will be described. Fig. 3 illustrates the flow of refrigerant in the first heating and defrosting operation in the air-conditioning apparatus according to Embodiment 1. In the first heating and defrosting operation, the expansion valves, the solenoid valves, the four-way valves, and other valves work as described below under control of the control unit 500.

The indoor expansion valve 13 is controlled so that a degree of subcooling of refrigerant at the outlet of the indoor heat exchanger 12 approaches a target value.

The heat storage expansion valve 11 is controlled so that a degree of superheat of refrigerant at the inlet of the accumulator 6A approaches a target value (for example, small values of 0 degrees C or more).

The heat source side expansion valve 4A is controlled to be in a fully-closed state.

The heat source side expansion valve 4B is controlled so that a degree of superheat of refrigerant at the inlet of the accumulator 6B approaches a target value (for example, small values of 0 degrees C or more).

The low pressure solenoid valve 7A and the hot gas bypass solenoid valve 8A are each controlled to be in an open state. The low pressure solenoid valve 7B and the hot gas bypass solenoid valve 8B are each controlled to be in a closed state. The four-way valves 3A and 3B are set so that flow passages through which high-pressure gas refrigerant discharged from the compressor 1A and high-pressure gas refrigerant discharged from the compressor 1B flow into the indoor heat exchanger 12 are formed, and so that flow passages through which low-pressure gas refrigerant having flowed out of the heat source side heat exchanger 5A and low-pressure gas refrigerant having flowed out of the heat source side heat exchanger 5B are sucked into the compressors 1A and 1B are formed. The four-way valve 9 is set so that a flow passage through which part of refrigerant having flowed out of the indoor expansion valve flows into the heat storage heat exchanger 10 through the heat storage expansion valve 11, and through which the refrigerant having flowed out of the heat storage heat exchanger 10 flows into the heat transfer circuit 50 is formed.

In the first heating and defrosting operation, a stream of high-pressure high-temperature gas refrigerant discharged from the compressor 1A is divided into a stream flowing through a flow passage toward the hot gas bypass solenoid valve 8A (the hot gas bypass circuit 60A) and a stream flowing through the flow passage toward the indoor heat exchanger 12 of the indoor unit 400 through the four-way valve 3A. The high-pressure gas refrigerant of the divided stream flowing through the hot gas bypass circuit 60A is reduced in pressure through the hot gas bypass solenoid valve 8A to turn into low-pressure gas refrigerant, and flows into the heat source side heat exchanger 5A. The low-pressure gas refrigerant having flowed into the heat source side heat exchanger 5A is condensed by transferring heat to defrost the heat source side heat exchanger 5A, and turns into low-pressure liquid refrigerant.

Furthermore, a stream of high-pressure high-temperature gas refrigerant discharged from the compressor 1B passes through the four-way valve 3B, and merges with a stream of high-pressure high-temperature gas refrigerant having passed through the four-way valve 3A (part of the gas refrigerant discharged from the compressor 1A) into a combined stream. The high-pressure gas refrigerant of the combined stream is condensed by heat exchange with indoor air in the indoor heat exchanger 12 to turn into high-pressure liquid refrigerant. At this time, the indoor air is heated by heat exchange with the refrigerant to turn into warm air. The high-pressure liquid refrigerant having flowed out of the indoor heat exchanger 12 is reduced in pressure by the indoor expansion valve 13 to turn into medium-pressure two-phase refrigerant. A stream of the medium-pressure two-phase refrigerant having flowed out of the indoor expansion valve 13 is divided into a stream flowing through the flow passage toward the heat storage heat exchanger 10 of the heat storage system 300 and a stream flowing through the flow passage toward the heat source unit 200.

The medium-pressure two-phase refrigerant of the divided stream flowing through the flow passage toward the heat storage heat exchanger 10 of the heat storage system 300 is reduced in pressure by the heat storage expansion valve 11 to turn into low-pressure two-phase refrigerant, and flows into the heat storage heat exchanger 10. The low-pressure two-phase refrigerant having flowed into the heat storage heat exchanger 10 evaporates by transferring heat from the heat storage material to turn into low-pressure gas refrigerant. A stream of this low-pressure gas refrigerant passes through the four-way valve 9 and the low pressure solenoid valve 7A, and merges with a stream of the low-pressure liquid refrigerant having flowed out of the heat source side heat exchanger 5A and having passed through the four-way valve 3A (the refrigerant used to defrost the heat source side heat exchanger 5A) into a combined stream. The refrigerant of the combined stream flows into the accumulator 6A to be separated into gas and liquid, and a gas refrigerant component is sucked into the compressor 1A.

The medium-pressure two-phase refrigerant of the divided stream flowing through the flow passage toward the heat source unit 200 is reduced in pressure by the heat source side expansion valve 4B to turn into low-pressure two-phase refrigerant, and further evaporates in the heat source side heat exchanger 5B to turn into low-pressure gas refrigerant. This low-pressure gas refrigerant is sucked into the compressor 1B through the four-way valve 3B and the accumulator 6B.

In the first heating and defrosting operation, the heat source side heat exchanger 5A and the indoor heat exchanger 12 each function as a condenser, and the heat source side heat exchanger 5B and the heat storage heat exchanger 10 each function as an evaporator. For this reason, a defrosting operation of the heat source unit 100 (the heat source side heat exchanger 5A) can be performed while a heating operation is being performed.

### [Actions in Second Heating and Defrosting Operation (OC2 Defrosting)]

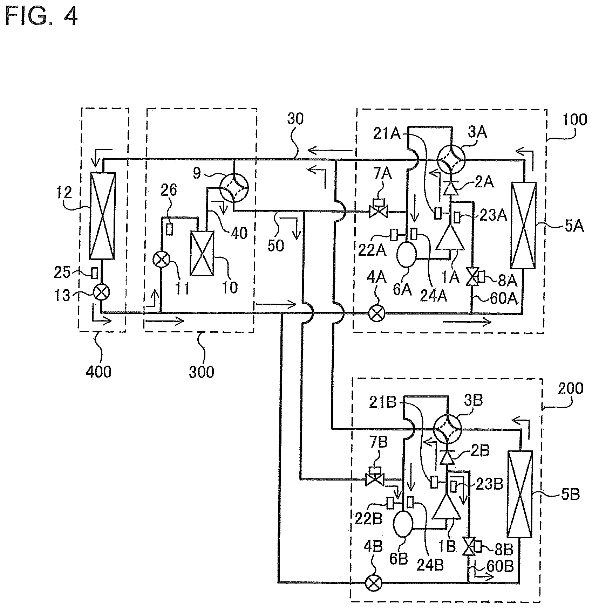

Next, actions in a second heating and defrosting operation (OC2 defrosting) in which a defrosting operation of the heat source unit 200 is performed while a heating operation is being performed will be described. Fig. 4 illustrates the flow of refrigerant in the second heating and defrosting operation in the air-conditioning apparatus according to Embodiment 1. In the second heating and defrosting operation, the expansion valves, the solenoid valves, the four-way valves, and other valves work as described below under control of the control unit 500.

The indoor expansion valve 13 is controlled so that a degree of subcooling of refrigerant at the outlet of the indoor heat exchanger 12 approaches a target value.

The heat storage expansion valve 11 is controlled so that a degree of superheat of refrigerant at the inlet of the accumulator 6B approaches a target value.

The heat source side expansion valve 4A is controlled so that a degree of superheat of refrigerant at the inlet of the accumulator 6A approaches a target value.

The heat source side expansion valve 4B is controlled to be in a fully-closed state.

The low pressure solenoid valve 7A and the hot gas bypass solenoid valve 8A are each controlled to be in a closed state. The low pressure solenoid valve 7B and the hot gas bypass solenoid valve 8B are each controlled to be in an open state. The four-way valves 3A and 3B are set so that flow passages through which high-pressure gas refrigerant discharged from the compressor 1A and high-pressure gas refrigerant discharged from the compressor 1B flow into the indoor heat exchanger 12 are formed, and so that flow passages through which low-pressure gas refrigerant having flowed out of the heat source side heat exchanger 5A and low-pressure gas refrigerant having flowed out of the heat source side heat exchanger 5B are sucked into the compressors 1A and 1B are formed. The four-way valve 9 is set so that a flow passage through which part of refrigerant having flowed out of the indoor expansion valve flows into the heat storage heat exchanger 10 through the heat storage expansion valve 11, and through which the refrigerant having flowed out of the heat storage heat exchanger 10 flows into the heat transfer circuit 50 is formed.

In the second heating and defrosting operation, a stream of high-pressure high-temperature gas refrigerant discharged from the compressor 1B is divided into a stream flowing through a flow passage toward the hot gas bypass solenoid valve 8B (the hot gas bypass circuit 60B) and a stream flowing through the flow passage toward the indoor heat exchanger 12 of the indoor unit 400 through the four-way valve 3B. The high-pressure gas refrigerant of the divided stream flowing through the hot gas bypass circuit 60B is reduced in pressure through the hot gas bypass solenoid valve 8B to turn into low-pressure gas refrigerant, and flows into the heat source side heat exchanger 5B. The low-pressure gas refrigerant having flowed into the heat source side heat exchanger 5B is condensed by transferring heat to defrost the heat source side heat exchanger 5B, and turns into low-pressure liquid refrigerant.

Furthermore, a stream of high-pressure high-temperature gas refrigerant discharged from the compressor 1A passes through the four-way valve 3A, and merges with a stream of high-pressure high-temperature gas refrigerant having passed through the four-way valve 3B (part of the gas refrigerant discharged from the compressor 1B) into a combined stream. The high-pressure gas refrigerant of the combined stream is condensed by heat exchange with indoor air in the indoor heat exchanger 12 to turn into high-pressure liquid refrigerant. At this time, the indoor air is heated by heat exchange with the refrigerant to turn into warm air. The high-pressure liquid refrigerant having flowed out of the indoor heat exchanger 12 is reduced in pressure by the indoor expansion valve 13 to turn into medium-pressure two-phase refrigerant. A stream of the medium-pressure two-phase refrigerant having flowed out of the indoor expansion valve 13 is divided into a stream flowing through the flow passage toward the heat storage heat exchanger 10 of the heat storage system 300 and a stream flowing through the flow passage toward the heat source unit 100.

The medium-pressure two-phase refrigerant of the divided stream flowing through the flow passage toward the heat storage heat exchanger 10 of the heat storage system 300 is reduced in pressure by the heat storage expansion valve 11 to turn into low-pressure two-phase refrigerant, and flows into the heat storage heat exchanger 10. The low-pressure two-phase refrigerant having flowed into the heat storage heat exchanger 10 evaporates by transferring heat from the heat storage material to turn into low-pressure gas refrigerant. A stream of this low-pressure gas refrigerant passes through the four-way valve 9 and the low pressure solenoid valve 7B, and merges with a stream of the low-pressure liquid refrigerant having flowed out of the heat source side heat exchanger 5B and having passed through the four-way valve 3B (the refrigerant used to defrost the heat source side heat exchanger 5B) into a combined stream. The refrigerant of the combined stream flows into the accumulator 6B to be separated into gas and liquid, and a gas refrigerant component is sucked into the compressor 1B.

The medium-pressure two-phase refrigerant of the divided stream flowing through the flow passage toward the heat source unit 100 is reduced in pressure by the heat source side expansion valve 4A to turn into low-pressure two-phase refrigerant, and further evaporates in the heat source side heat exchanger 5A to turn into low-pressure gas refrigerant. This low-pressure gas refrigerant is sucked into the compressor 1A through the four-way valve 3A and the accumulator 6A.

In the second heating and defrosting operation, the heat source side heat exchanger 5B and the indoor heat exchanger 12 each function as a condenser, and the heat source side heat exchanger 5A and the heat storage heat exchanger 10 each function as an evaporator. For this reason, a defrosting operation of the heat source unit 200 (the heat source side heat exchanger 5B) can be performed while a heating operation is being performed.

### [Order in Which Heating and Heat Storage Operation, and First and Second Heating and Defrosting Operations Are Performed]

The heating and heat storage operation, and the first and second heating and defrosting operations are performed in the order of, for example, heating and heat storage operation → first heating and defrosting operation → heating and heat storage operation → second heating and defrosting operation → heating and heat storage operation. The first heating and defrosting operation and the second heating and defrosting operation are sequentially performed with the heating and heat storage operation in between. That is, the plurality of heat source units 100 and 200 are not simultaneously or continuously defrosted, but are sequentially defrosted one by one with the heating and heat storage operation in between.

In this example, when the air-conditioning apparatus is activated, the heating and heat storage operation is performed. Points in time when the first heating and defrosting operation and the second heating and defrosting operation are started are determined on the basis of surface temperatures of the heat source side heat exchangers 5A and 5B, an outdoor temperature (outdoor air temperature), detection signals from frost formation detection units that detect frost formation in the heat source side heat exchangers 5A and 5B, and a time period that elapses after the heating and heat storage operation is started, for example. For example, if the surface temperatures of the heat source side heat exchangers 5A and 5B are higher than or equal to a predetermined temperature, the heating and heat storage operation is continuously performed. If the surface temperatures of the heat source side heat exchangers 5A and 5B are below the predetermined temperature, and if the time period that elapses after the heating and heat storage operation is started is more than or equal to a predetermined time period, the first heating and defrosting operation or the second heating and defrosting operation is started. Additionally, points in time when the first heating and defrosting operation and the second heating and defrosting operation are finished are determined on the basis of surface temperatures of the heat source side heat exchangers 5A and 5B, detection signals from the frost formation detection units that detect frost formation in the heat source side heat exchangers 5A and 5B, and time periods that elapse after the respective heating and defrosting operations are started, for example.

Note that the air-conditioning apparatus according to Embodiment 1 can perform a cooling operation in addition to the heating and heat storage operation, the first heating and defrosting operation (OC1 defrosting), and the second heating and defrosting operation (OC2 defrosting). In the cooling operation, the four-way valves 3A and 3B are switched so that flow passages through which high-pressure gas refrigerant discharged from the compressor 1A and high-pressure gas refrigerant discharged from the compressor 1B flow into the heat source side heat exchangers 5A and 5B are formed, and so that flow passages through which low-pressure gas refrigerant having flowed out of the indoor heat exchanger 12 is sucked into the compressors 1A and 1B are formed. The low pressure solenoid valves 7A and 7B, and the hot gas bypass solenoid valves 8A and 8B are each controlled to be in a closed state. Detailed descriptions of actions in the cooling operation are omitted.

### [Effects]

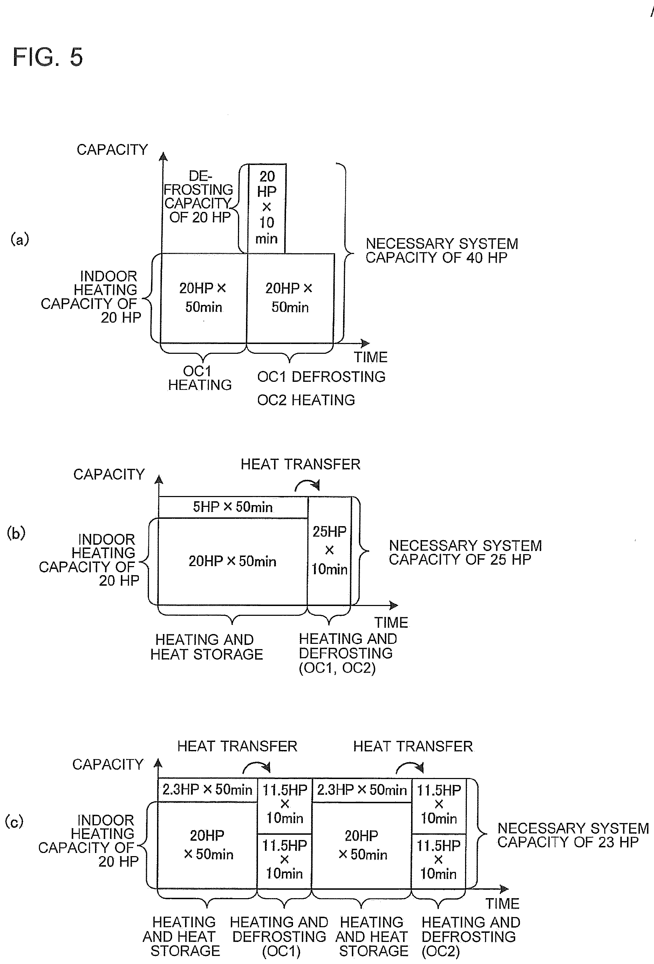

Effects of the air-conditioning apparatus according to Embodiment 1 will be described. Fig. 5 includes diagrams illustrating effects of the air-conditioning apparatus according to Embodiment 1. Fig. 5 (a) illustrates a necessary capacity in an existing multi-heat source unit system not using stored heat. Fig. 5 (b) illustrates a necessary capacity in the case where heating and defrosting operations of a plurality of heat source units are simultaneously performed in a multi-heat source unit system using stored heat. Fig. 5 (c) illustrates a necessary capacity in the case where heating and defrosting operations of a plurality of heat source units are sequentially performed one by one with a heating and heat storage operation in between in a multi-heat source unit system using stored heat. In Figs. 5 (a) to 5 (c), the horizontal axis represents the passage of time, and the vertical axis represents capacity (HP). In any of the multi-heat source unit systems, the number of heat source units is two, the capacity of an indoor unit to be connected is 20 HP, and a capacity equivalent to 20 HP is secured in the indoor unit in a heating and defrosting operation. Additionally, a heat storage time period is assumed to be 50 minutes and a defrosting time period is assumed to be 10 minutes.

As illustrated in Fig. 5 (a), in the existing multi-heat source unit system not using stored heat, when the heat source unit OC1 is defrosted, an indoor unit capacity of 20 HP is supplemented by a heating operation of the heat source unit OC2. Furthermore, although not illustrated, when the heat source unit OC2 is defrosted, the indoor unit capacity of 20 HP is supplemented by a heating operation of the heat source unit OC1. Thus, in this multi-heat source unit system, heat source units having a total capacity of 40 HP are needed.

As illustrated in Fig. 5 (b), in the multi-heat source unit system using stored heat, in the case where heating and defrosting operations of two heat source units OC1 and OC2 are simultaneously performed, an indoor unit capacity of 20 HP and a heat storage capacity of 5 HP are supplemented by a 50-minute heating and heat storage operation of the heat source units OC1 and OC2. Then, during a 10-minute defrosting operation in which the heating and defrosting operations of the heat source units OC1 and OC2 are simultaneously performed, the indoor unit capacity of 20 HP and a defrosting capacity of 5 HP are supplemented by a heat transfer capacity of 25 HP (5 HP × 50 minutes/10 minutes). Thus, in this multi-heat source unit system, heat source units having a total capacity of 25 HP, which is smaller than that in the multi-heat source unit system illustrated in Fig. 5 (a), are needed.

As illustrated in Fig. 5 (c), in the multi-heat source unit system using stored heat, in the case where heating and defrosting operations of two heat source units OC1 and OC2 are sequentially performed one by one with a heating and heat storage operation in between, an indoor unit capacity of 20 HP and a heat storage capacity of 2.3 HP are supplemented by a 50-minute heating and heat storage operation of the heat source units OC1 and OC2. Then, during a 10-minute defrosting operation in which the heating and defrosting operation of the heat source unit OC1 is performed, the indoor unit capacity of 20 HP and a defrosting capacity of 3 HP are supplemented by a heat transfer capacity of 11.5 HP (2.3 HP × 50 minutes/10 minutes) and a heating capacity of the heat source units OC1 and OC2 of 11.5 HP (mainly accounted for by the heating capacity of the heat source unit OC2). Subsequently, the indoor unit capacity of 20 HP and the heat storage capacity of 2.3 HP are supplemented by a 50-minute heating and heat storage operation of the heat source units OC1 and OC2. Then, during a 10-minute defrosting operation in which the heating and defrosting operation of the heat source unit OC2 is performed, the indoor unit capacity of 20 HP and the defrosting capacity of 3 HP are supplemented by a heat transfer capacity of 11.5 HP (2.3 HP × 50 minutes/10 minutes) and a heating capacity of the heat source units OC1 and OC2 of 11.5 HP (mainly accounted for by the heating capacity of the heat source unit OC1). Thus, in this multi-heat source unit system, heat source units having a total capacity of 23 HP, which is even smaller than that in the multi-heat source unit system illustrated in Fig. 5 (b), are needed.

As described above, in the multi-heat source unit system using stored heat, in the case where the two heat source units OC1 and OC2 are simultaneously defrosted, the amount of heat to be transferred equivalent to an indoor unit capacity and a defrosting capacity for two heat source units is needed, whereas, in the case where the two heat source units OC1 and OC2 are alternately defrosted one by one, the necessary amount of heat to be transferred can be reduced to the amount of heat to be transferred equivalent to the indoor unit capacity and a defrosting capacity for one heat source unit. Hence, according to Embodiment 1, the necessary defrosting capacity during one heating and defrosting operation can be reduced, and the necessary amount of heat to be transferred can be reduced. For this reason, the capacity of the compressor of each heat source unit can be reduced, and thus enabling a reduction in the size of each heat source unit. Additionally, the amount of heat stored can be reduced, thus enabling a reduction in the capacity of the heat storage tank.

As described above, the air-conditioning apparatus according to Embodiment 1 includes the plurality of heat source units 100 and 200 including the respective compressors 1A and 1B, the respective heat source side expansion valves 4A and 4B, the respective heat source side heat exchangers 5A and 5B, and the respective accumulators 6A and 6B, and connected in parallel to each other; at least one indoor unit 400 including the indoor heat exchanger 12 and the indoor expansion valve 13; the main circuit 30 in which the compressors 1A and 1B, the indoor heat exchanger 12, the indoor expansion valve 13, the heat source side expansion valves 4A and 4B, the heat source side heat exchangers 5A and 5B, and the accumulators 6A and 6B are provided in a circle; the heat storage circuit 40 connected to the main circuit 30 in parallel with the indoor heat exchanger 12 and the indoor expansion valve 13, and including the four-way valve 9 (an example of a flow switching unit), the heat storage heat exchanger 10 exchanging heat with the heat storage material, and the heat storage expansion valve 11; the heat transfer circuit 50 connecting the four-way valve 9 and inlet sides of the respective accumulators 6A and 6B of the plurality of heat source units 100 and 200, and including the low pressure solenoid valves 7A and 7B (examples of first opening and closing units) provided for the respective plurality of heat source units 100 and 200; and the plurality of hot gas bypass circuits 60A and 60B provided for the respective plurality of heat source units 100 and 200, and connecting discharge sides of the respective compressors 1A and 1B and points between the respective heat source side expansion valves 4A and 4B and the respective heat source side heat exchangers 5A and 5B, and including the respective hot gas bypass solenoid valves 8A and 8B (examples of second opening and closing units). The air-conditioning apparatus can perform a heating and heat storage operation in which the indoor heat exchanger 12 and the heat storage heat exchanger 10 are each caused to function as a condenser, and the heat source side heat exchangers 5A and 5B are each caused to function as an evaporator, and in which heat is stored in the heat storage material while a heating operation is being performed, a first heating and defrosting operation in which the heat source side heat exchanger 5A of the heat source unit 100 and the indoor heat exchanger 12 are each caused to function as a condenser, and the heat source side heat exchanger 5B of the heat source unit 200 and the heat storage heat exchanger 10 are each caused to function as an evaporator, and in which heat is transferred from the heat storage material and a defrosting operation of the heat source unit 100 is performed while a heating operation is being performed, and a second heating and defrosting operation in which the heat source side heat exchanger 5B of the heat source unit 200 and the indoor heat exchanger 12 are each caused to function as a condenser, and the heat source side heat exchanger 5A of the heat source unit 100 and the heat storage heat exchanger 10 are each caused to function as an evaporator, and in which heat is transferred from the heat storage material and a defrosting operation of the heat source unit 200 is performed while a heating operation is being performed. The first heating and defrosting operation and the second heating and defrosting operation are sequentially performed with the heating and heat storage operation in between.

In this configuration, the first heating and defrosting operation in which a defrosting operation of a first heat source unit is performed while a heating operation is being performed, and the second heating and defrosting operation in which a defrosting operation of a second heat source unit is performed while a heating operation is being performed are sequentially performed with the heating and heat storage operation in between, thus enabling a reduction in necessary defrosting capacity during one heating and defrosting operation. For this reason, the necessary amount of heat to be transferred can be reduced, and thus enabling a reduction in the capacity of the compressor of each heat source unit. Hence, there can be provided the air-conditioning apparatus that can perform a defrosting operation while performing a heating operation and includes a reduced size of the heat source unit. Additionally, the amount of heat stored can be reduced, thus enabling a reduction in the capacity of the heat storage tank.

In the above-described air-conditioning apparatus, in the case where the heating and heat storage operation is performed, all the low pressure solenoid valves 7A and 7B and all the hot gas bypass solenoid valves 8A and 8B are each brought into a closed state, and the four-way valve 9 is set so that a flow passage through which part of refrigerant discharged from the compressors 1A and 1B flows into the heat storage heat exchanger 10, and through which refrigerant having flowed out of the heat storage heat exchanger 10 and having passed through the heat storage expansion valve 11 flows into the heat source side expansion valves 4A and 4B is formed. In the case where the first heating and defrosting operation is performed, the low pressure solenoid valve 7A and the hot gas bypass solenoid valve 8A included in the heat source unit 100 are each brought into an open state, the heat source side expansion valve 4A of the heat source unit 100 is brought into a fully-closed state, the low pressure solenoid valve 7B and the hot gas bypass solenoid valve 8B included in the heat source unit 200 are each brought into a closed state, and the four-way valve 9 is set so that a flow passage through which part of refrigerant having flowed out of the indoor expansion valve 13 flows into the heat storage heat exchanger 10 through the heat storage expansion valve 11, and through which refrigerant having flowed out of the heat storage heat exchanger 10 flows into the heat transfer circuit 50 is formed. In the case where the second heating and defrosting operation is performed, the low pressure solenoid valve 7A and the hot gas bypass solenoid valve 8A included in the heat source unit 100 are each brought into a closed state, the low pressure solenoid valve 7B and the hot gas bypass solenoid valve 8B included in the heat source unit 200 are each brought into an open state, the heat source side expansion valve 4B of the heat source unit 200 is brought into a fully-closed state, and the four-way valve 9 is set so that a flow passage through which part of refrigerant having flowed out of the indoor expansion valve 13 flows into the heat storage heat exchanger 10 through the heat storage expansion valve 11, and through which refrigerant having flowed out of the heat storage heat exchanger 10 flows into the heat transfer circuit 50 is formed.

Additionally, in the air-conditioning apparatus according to Embodiment 1, in the case where the first heating and defrosting operation is performed, the heat source side expansion valve 4B of the heat source unit 200 is controlled so that a degree of superheat at an inlet of the accumulator 6B of the heat source unit 200 approaches a target value, and, in the case where the second heating and defrosting operation is performed, the heat source side expansion valve 4A of the heat source unit 100 is controlled so that a degree of superheat at an inlet of the accumulator 6A of the heat source unit 100 approaches a target value.

In this configuration, when target values of degrees of superheat at the inlets of the accumulators 6A and 6B are set to small values of 0 degrees C or more, liquid compression operations of the compressors 1A and 1B can be prevented, and the energy of the air-conditioning apparatus can also be saved because of efficient use of the heat exchangers.

Additionally, in the air-conditioning apparatus according to Embodiment 1, in the case where the heating and heat storage operation is performed, the heat storage expansion valve 11 is controlled so that a degree of subcooling at an outlet of the heat storage heat exchanger 10 approaches a target value, and a target value of the degree of subcooling when an outdoor temperature is a first temperature is set to a value smaller than a target value of the degree of subcooling when an outdoor temperature is a second temperature higher than the first temperature.

This configuration enables an increase in the amount of heat stored when an outdoor temperature is low, and thus a reduction in heating capacity in defrosting can be prevented and frost can be prevented from remaining.

Additionally, in the air-conditioning apparatus according to Embodiment 1, in the case where the heating and heat storage operation is performed, the heat storage expansion valve 11 is controlled so that a degree of subcooling at an outlet of the heat storage heat exchanger 10 approaches a target value, and a target value of the degree of subcooling when a heating load of the indoor unit 400 is a first value is set to a value smaller than a target value of the degree of subcooling when a heating load of the indoor unit 400 is a second value smaller than the first value.

This configuration enables an increase in the amount of heat stored when a heating load is high, and thus a reduction in heating capacity in defrosting can be prevented and frost can be prevented from remaining.

### Other Embodiments

The present invention is not limited to Embodiment 1, and various modifications can be made.

### [The Number of Heat Source Units]

Although, in Embodiment 1, the number of the heat source units is two as an example, the number of the heat source units may be three or more. In the case of three or more heat source units, defrosting operations (heating and defrosting operations) of the respective heat source units are also sequentially performed with a heating and heat storage operation in between. The necessary amount of heat to be transferred per power can be reduced as the number of the heat source units increases, and thus effects of reductions in the capacity of each compressor and the capacity of the heat storage tank are increased.

### [The Number of Indoor Units]

Although, in Embodiment 1, the number of indoor units is one as an example, the number of indoor units may be two or more. Even in the case of two or more indoor units, effects similar to those in Embodiment 1 are obtained.

### [Expansion Valve Control]

Although, in Embodiment 1, in the heating and heat storage operation, the heat source side expansion valves 4A and 4B are respectively controlled so that a degree of superheat of refrigerant at the inlet of the accumulator 6A and a degree of superheat of refrigerant at the inlet of the accumulator 6B approach respective target values, even if the heat source side expansion valves 4A and 4B are respectively controlled so that a degree of superheat of refrigerant discharged from the compressor 1A and a degree of superheat of refrigerant discharged from the compressor 1B approach respective target values, similar effects are obtained. The degree of superheat of the refrigerant discharged from the compressor 1A and the degree of superheat of the refrigerant discharged from the compressor 1B are obtained by using refrigerant pressures detected by the respective high pressure sensors 21A and 21B and refrigerant temperatures estimated from pipe temperatures detected by the respective discharge temperature sensors 23A and 23B.

Additionally, although, in Embodiment 1, in the first heating and defrosting operation, the heat storage expansion valve 11 and the heat source side expansion valve 4B are respectively controlled so that a degree of superheat of refrigerant at the inlet of the accumulators 6A and a degree of superheat of refrigerant at the inlet of the accumulator 6B approach respective target values, even if the heat storage expansion valve 11 and the heat source side expansion valve 4B are respectively controlled so that a degree of superheat of refrigerant discharged from the compressor 1A and a degree of superheat of refrigerant discharged from the compressor 1B approach respective target values, similar effects are obtained.

Furthermore, although, in Embodiment 1, in the second heating and defrosting operation, the heat source side expansion valve 4A and the heat storage expansion valve 11 are respectively controlled so that a degree of superheat of refrigerant at the inlet of the accumulators 6A and a degree of superheat of refrigerant at the inlet of the accumulator 6B approach respective target values, even if the heat source side expansion valve 4A and the heat storage expansion valve 11 are respectively controlled so that a degree of superheat of refrigerant discharged from the compressor 1A and a degree of superheat of refrigerant discharged from the compressor 1B approach respective target values, similar effects are obtained.

### [Refrigerant]

Refrigerant used in Embodiment 1 is not limited to particular refrigerant. If refrigerant whose discharge temperature is likely to be high, such as R32, is used, the amount of heat stored in the heating and heat storage operation can be increased, and thus effects of reductions in the capacity of each compressor and the capacity of the heat storage tank are increased.

The above-described Embodiments or modifications can be combined with each other and implemented.

### Reference Signs List

1A, 1B compressor, 2A, 2B check valve, 3A, 3B four-way valve, 4A, 4B heat source side expansion valve, 5A, 5B heat source side heat exchanger, 6A, 6B accumulator, 7A, 7B low pressure solenoid valve, 8A, 8B hot gas bypass solenoid valve, 9 four-way valve, 10 heat storage heat exchanger, 11 heat storage expansion valve, 12 indoor heat exchanger, 13 indoor expansion valve, 21A, 21B high pressure sensor, 22A, 22B low pressure sensor, 23A, 23B discharge temperature sensor, 24A, 24B suction temperature sensor, 25, 26 temperature sensor, 30 main circuit, 40 heat storage circuit, 50 heat transfer circuit, 60A, 60B hot gas bypass circuit, 100 heat source unit (OC1), 200 heat source unit (OC2), 300 heat storage system, 400 indoor unit, 500 control unit, C1, C2, C3A, C3B, C4A, C4B, C5A, C5B connection point

## Claims

1. An air-conditioning apparatus comprising:
a heat storage tank; a heat storage material;
a plurality of heat source units (100, 200) each including a compressor (1A, 1B), a four-way valve (3A, 3B), a heat source side expansion valve (4A, 4B), a heat source side heat exchanger (5A, 5B), and an accumulator (6A, 6B), and connected in parallel with one another;
a main circuit (30) in which the compressors (1A, 1B), the four-way valves (3A, 3B), the indoor heat exchanger (12), the indoor expansion valve (13), the heat source side expansion valves (4A, 4B), the heat source side heat exchangers (5A, 5B), and the accumulators (6A, 6B) are provided in a circle;
wherein the air-conditioning apparatus further comprises:
a heat storage circuit (40) connected to the main circuit in parallel with the indoor heat exchanger (12) and the indoor expansion valve (13), and including a flow switching unit (9), a heat storage heat exchanger (10) provided in the heat storage tank together with the heat storage material, and exchanging heat with the heat storage material, and a heat storage expansion valve (11);
a heat transfer circuit (50) connecting the flow switching unit (9) and an inlet side of each accumulator (6A, 6B) of the plurality of heat source units (100, 200), and including a first opening and closing unit (7A, 7B) provided for each of the plurality of heat source units (100, 200); and
a plurality of hot gas bypass circuits (60A, 60B) each provided for each of the plurality of heat source units (100, 200), and each connecting a discharge side of each compressor (1A, 1B) and a point between each heat source side expansion valve (4A, 4B) and the corresponding heat source side heat exchanger (5A, 5B), and each including a second opening and closing unit (8A, 8B);
a plurality of high pressure sensors (21A, 21B) each provided for each of the plurality of heat source units and configured to detect a pressure of refrigerant discharged from the compressor (1A, 1B);
a plurality of low pressure sensors (22A, 22B) each provided for each of the plurality of heat source units and configured to detect a pressure of refrigerant to be sucked to the compressor (1A, 1B);
a plurality of discharge temperature sensors (23A, 23B) each provided for each of the plurality of heat source units and configured to detect a temperature of the refrigerant discharged from the compressor (1A, 1B);
a plurality of suction temperature sensors (24A, 24B) each provided for each of the plurality of heat source units and configured to detect a temperature of the refrigerant to be sucked to the compressor (1A, 1B);
a first temperature sensor (25) configured to detect a temperature of refrigerant flowing between the indoor heat exchanger (12) and the indoor expansion valve (13);
a second temperature sensor (26) configured to detect a temperature of refrigerant flowing between the heat storage heat exchanger (10) and the heat storage expansion valve (11); and
a control unit (500) configured to control actions of the compressors (1A, 1B), the four-way valves (3A, 3B), the heat source side expansion valves (4A, 4B), the first opening and closing units (7A, 7B), the second opening and closing units (8A, 8B), the flow switching unit (9), the heat storage expansion valve (11), and the indoor expansion valve (13) on the basis of signals detected from the high pressure sensors (21A, 21B), the low pressure sensors (22A, 22B), the discharge temperature sensors (23A, 23B), the suction temperature sensors (24A, 24B), the first temperature sensor (25), and the second temperature sensor (26),
the control unit (500) is configured to perform
a heating and heat storage operation in which a heating operation is being performed where the indoor heat exchanger (12) and the heat storage heat exchanger (10) are each caused to function as a condenser, and the heat source side heat exchangers (5A, 5B) are each caused to function as an evaporator, and in which heat is stored in the heat storage material,
a first heating and defrosting operation in which a heating operation is being performed where the heat source side heat exchanger (5A) of a first heat source unit (100) among the plurality of heat source units (100, 200) and the indoor heat exchanger (12) are each caused to function as a condenser, and the heat source side heat exchanger (5B) of a second heat source unit (200) among the plurality of heat source units (100, 200) and the heat storage heat exchanger (10) are each caused to function as an evaporator, and in which heat is transferred from the heat storage material and a defrosting operation of the first heat source unit (100) is performed, and
a second heating and defrosting operation in which a heating operation is being performed where the heat source side heat exchanger (5B) of the second heat source unit (200) and the indoor heat exchanger (12) are each caused to function as a condenser, and the heat source side heat exchanger (5A) of the first heat source unit (100) and the heat storage heat exchanger (10) are each caused to function as an evaporator, and in which heat is transferred from the heat storage material and a defrosting operation of the second heat source unit (200) is performed, and the first heating and defrosting operation and the second heating and defrosting operation are sequentially performed with the heating and heat storage operation in between.

2. The air-conditioning apparatus of claim 1,
wherein, in a case where the heating and heat storage operation is performed, the control unit (500) is configured to bring all the first opening and closing units and all the second opening and closing units into a closed state, and to set the flow switching unit so that a flow passage through which part of refrigerant discharged from the compressors flows into the heat storage heat exchanger, and through which refrigerant having flowed out of the heat storage heat exchanger and having passed through the heat storage expansion valve flows into the heat source side expansion valves is formed,
wherein, in a case where the first heating and defrosting operation is performed, the control unit (500) is configured to bring the first opening and closing unit (7A) and the second opening and closing unit (8A) included in the first heat source unit into an open state, to bring the heat source side expansion valve (4A) of the first heat source unit into a fully-closed state, to bring the first opening and closing unit (7B) and the second opening and closing unit (8B) included in the second heat source unit into a closed state, and to set the flow switching unit so that a flow passage through which part of refrigerant having flowed out of the indoor expansion valve flows into the heat storage heat exchanger through the heat storage expansion valve, and through which refrigerant having flowed out of the heat storage heat exchanger flows into the heat transfer circuit is formed, and
wherein, in a case where the second heating and defrosting operation is performed, the control unit (500) is configured to bring the first opening and closing unit (7A) and the second opening and closing unit (8A) included in the first heat source unit into a closed state, to bring the first opening and closing unit (7B) and the second opening and closing unit (8B) included in the second heat source unit into an open state, to bring the heat source side expansion valve (4B) of the second heat source unit into a fully-closed state, and to set the flow switching unit so that a flow passage through which part of refrigerant having flowed out of the indoor expansion valve flows into the heat storage heat exchanger through the heat storage expansion valve, and through which refrigerant having flowed out of the heat storage heat exchanger flows into the heat transfer circuit is formed.

3. The air-conditioning apparatus of claim 1 or claim 2,
wherein, in a case where the first heating and defrosting operation is performed, the control unit (500) is configured to control the heat source side expansion valve (4B) of the second heat source unit so that a degree of superheat at an inlet of the accumulator (6B) of the second heat source unit approaches a target value, and
wherein, in a case where the second heating and defrosting operation is performed, the control unit (500) is configured to control the heat source side expansion valve (4A) of the first heat source unit so that a degree of superheat at an inlet of the accumulator (6A) of the first heat source unit approaches a target value.

4. The air-conditioning apparatus of any one of claims 1 to 3,
wherein, in a case where the heating and heat storage operation is performed, the control unit (500) is configured to control the heat storage expansion valve so that a degree of subcooling at an outlet of the heat storage heat exchanger approaches a target value, and
wherein the control unit (500) is configured to set a target value of the degree of subcooling when an outdoor temperature is a first temperature to a value smaller than a target value of the degree of subcooling when an outdoor temperature is a second temperature higher than the first temperature.

5. The air-conditioning apparatus of any one of claims 1 to 4,
wherein, in a case where the heating and heat storage operation is performed, the control unit (500) is configured to control the heat storage expansion valve so that a degree of subcooling at an outlet of the heat storage heat exchanger approaches a target value, and
wherein the control unit (500) is configured to set a target value of the degree of subcooling when a heating load of the indoor unit is a first value to a value smaller than a target value of the degree of subcooling when a heating load of the indoor unit is a second value smaller than the first value.

## Patentansprüche

1. Klimaanlage, umfassend:
einen Wärmespeicherbehälter; ein Wärmespeichermaterial;
eine Vielzahl von Wärmequelleneinheiten (100, 200), jeweils aufweisend einen Verdichter (1A, 1B), ein Vierwegeventil (3A, 3B), ein wärmequellenseitiges Expansionsventil (4A, 4B), einen wärmequellenseitigen Wärmetauscher (5A, 5B) und einen Sammler (6A, 6B), und die parallel zueinander verbunden sind;
zumindest eine Inneneinheit (400), aufweisend einen Innenwärmetauscher (12) und ein Innen-Expansionsventil (13);
einen Hauptkreislauf (30), in dem die Verdichter (1A, 1B), die Vierwegeventile (3A, 3B), der Innenwärmetauscher (12), das Innen-Expansionsventil (13), die wärmequellenseitigen Expansionsventile (4A, 4B), die wärmequellenseitigen Wärmetauscher (5A, 5B) und die Sammler (6A, 6B) in einem Kreis vorgesehen sind;
wobei die Klimaanlage ferner umfasst:
einen Wärmespeicherkreislauf (40), der mit dem Hauptkreislauf parallel zu dem Innenwärmetauscher (12) und dem Innen-Expansionsventil (13) verbunden ist, und aufweisend eine Strömungsschalteinheit (9), einen Wärmespeicher-Wärmetauscher (10), der zusammen mit dem Wärmespeichermaterial in dem Wärmespeicherbehälter vorgesehen ist, und austauschend Wärme mit dem Wärmespeichermaterial, und ein Wärmespeicher-Expansionsventil (11);
einen Wärmeübertragungskreislauf (50), verbindend die Strömungsschalteinheit (9) und eine Einlassseite jedes Sammlers (6A, 6B) der Vielzahl von Wärmequelleneinheiten (100, 200), und aufweisend eine erste Öffnungs-und-Schließeinheit (7A, 7B), die für jede der Vielzahl von Wärmequelleneinheiten (100, 200) vorgesehen ist; und
eine Vielzahl von Heißgas-Umgehungskreisläufen (60A, 60B), die jeweils für jede der Vielzahl von Wärmequelleneinheiten (100, 200) vorgesehen sind, und jeweils verbindend eine Abgabeseite jedes Verdichters (1A, 1B) und einen Punkt zwischen jedem wärmequellenseitigen Expansionsventil (4A, 4B) und dem entsprechenden wärmequellenseitigen Wärmetauscher (5A, 5B), und jeweils aufweisend eine zweite Öffnungs-und-Schließeinheit (8A, 8B);
eine Vielzahl von Hochdrucksensoren (21A, 21B), die jeweils für jede der Vielzahl von Wärmequelleneinheiten vorgesehen sind und eingerichtet sind, einen Druck des von dem Verdichter (1A, 1B) abgegebenen Kältemittels zu erfassen;
eine Vielzahl von Niederdrucksensoren (22A, 22B), die jeweils für jede der Vielzahl von Wärmequelleneinheiten vorgesehen sind und eingerichtet sind, einen Druck des zu dem Verdichter (1A, 1B) anzusaugenden Kältemittels zu erfassen;
eine Vielzahl von Abgabetemperatursensoren (23A, 23B), die jeweils für jede der Vielzahl von Wärmequelleneinheiten vorgesehen sind und eingerichtet sind, eine Temperatur des von dem Verdichter (1A, 1B) abgegebenen Kältemittels zu erfassen;
eine Vielzahl von Ansaugtemperatursensoren (24A, 24B), die jeweils für jede der Vielzahl von Wärmequelleneinheiten vorgesehen sind und eingerichtet sind, eine Temperatur des zu dem Verdichter (1A, 1B) anzusaugenden Kältemittels zu erfassen;
einen ersten Temperatursensor (25), der eingerichtet ist, eine Temperatur des zwischen dem Innenwärmetauscher (12) und dem Innen-Expansionsventil (13) strömenden Kältemittels zu erfassen;
einen zweiten Temperatursensor (26), der eingerichtet ist, eine Temperatur des zwischen dem Wärmespeicher-Wärmetauscher (10) und dem Wärmespeicher-Expansionsventil (11) strömenden Kältemittels zu erfassen; und
eine Steuereinheit (500), die eingerichtet ist, Aktionen der Verdichter (1A, 1B), der Vierwegeventile (3A, 3B), der wärmequellenseitigen Expansionsventile (4A, 4B), der ersten Öffnungs-und-Schließeinheiten (7A, 7B), der zweiten Öffnungs-und-Schließeinheiten (8A, 8B), der Strömungsschalteinheit (9), des Wärmespeicher-Expansionsventils (11) und des Innen-Expansionsventils (13) zu steuern auf Grundlage von Signalen, die von den Hochdrucksensoren (21A, 21B), den Niederdrucksensoren (22A, 22B), den Abgabetemperatursensoren (23A, 23B), den Ansaugtemperatursensoren (24A, 24B), dem ersten Temperatursensor (25) und dem zweiten Temperatursensor (26) erfasst werden,
wobei die Steuereinheit (500) eingerichtet ist, durchzuführen:
einen Erwärmungs-und-Wärmespeicherbetrieb, bei dem ein Erwärmungsbetrieb durchgeführt wird, wobei der Innenwärmetauscher (12) und der Wärmespeicher-Wärmetauscher (10) jeweils veranlasst werden, als ein Kondensator zu funktionieren, und die wärmequellenseitigen Wärmetauscher (5A, 5B) jeweils veranlasst werden, als ein Verdampfer zu funktionieren, und bei dem Wärme in dem Wärmespeichermaterial gespeichert wird,
einen ersten Erwärmungs-und-Entfrostungsbetrieb, bei dem ein Erwärmungsbetrieb durchgeführt wird, wobei der wärmequellenseitige Wärmetauscher (5A) einer ersten Wärmequelleneinheit (100) unter der Vielzahl von Wärmequelleneinheiten (100, 200) und der Innenwärmetauscher (12) jeweils veranlasst werden, als ein Kondensator zu funktionieren, und der wärmequellenseitige Wärmetauscher (5B) einer zweiten Wärmequelleneinheit (200) unter der Vielzahl von Wärmequelleneinheiten (100, 200) und der Wärmespeicher-Wärmetauscher (12) jeweils veranlasst werden, als ein Verdampfer zu funktionieren, und bei dem Wärme von dem Wärmespeichermaterial übertragen wird und ein Entfrostungsbetrieb der ersten Wärmequelleneinheit (100) durchgeführt wird, und
einen zweiten Erwärmungs-und-Entfrostungsbetrieb, bei dem ein Erwärmungsbetrieb durchgeführt wird, wobei der wärmequellenseitige Wärmetauscher (5B) der zweiten Wärmequelleneinheit (200) und der Innenwärmetauscher (12) jeweils veranlasst werden, als ein Kondensator zu funktionieren, und der wärmequellenseitige Wärmetauscher (5A) der ersten Wärmequelleneinheit (100) und der Wärmespeicher-Wärmetauscher (10) jeweils veranlasst werden, als ein Verdampfer zu funktionieren, und bei dem Wärme von dem Wärmespeichermaterial übertragen wird und ein Entfrostungsbetrieb der zweiten Wärmequelleneinheit (200) durchgeführt wird, und
der erste Erwärmungs-und-Entfrostungsbetrieb und der zweite Erwärmungs-und-Entfrostungsbetrieb nacheinander durchgeführt werden, wobei der Erwärmungs-und-Wärmespeicherbetrieb dazwischen liegt.

2. Klimaanlage nach Anspruch 1,
wobei in einem Fall, in dem der Erwärmungs-und-Wärmespeicherbetrieb durchgeführt wird, die Steuereinheit (500) eingerichtet ist, alle ersten Öffnungs-und-Schließeinheiten und alle der zweiten Öffnungs-und-Schließeinheiten in einen geschlossenen Zustand zu bringen, und die Strömungsschalteinheit einzustellen, so dass ein Strömungsdurchlass gebildet wird, durch den ein Teil des von den Verdichtern abgegebenen Kältemittels in den Wärmespeicher-Wärmetauscher strömt und durch den Kältemittel, das aus dem Wärmespeicher-Wärmetauscher ausgeströmt ist und das Wärmespeicher-Expansionsventil passiert hat, in die wärmequellenseitigen Expansionsventile strömt,
wobei in einem Fall, in dem der erste Erwärmungs-und-Entfrostungsbetrieb durchgeführt wird, die Steuereinheit (500) eingerichtet ist, die erste Öffnungs-und-Schließeinheit (7A) und die zweite Öffnungs-und-Schließeinheit (8A), die in der ersten Wärmequelleneinheit enthalten sind, in einen offenen Zustand zu bringen, um das wärmequellenseitige Expansionsventil (4A) der ersten Wärmequelleneinheit in einen vollständig geschlossenen Zustand zu bringen, die erste Öffnungs-und-Schließeinheit (7B) und die zweite Öffnungs-und-Schließeinheit (8B), die in der zweiten Wärmequelleneinheit enthalten sind, in einen geschlossenen Zustand zu bringen, und die Strömungsschalteinheit einzustellen, so dass ein Strömungsdurchlass gebildet wird, durch den ein Teil des Kältemittels, das aus dem Innen-Expansionsventil ausgeströmt ist, durch das Wärmespeicher-Expansionsventil in den Wärmespeicher-Wärmetauscher strömt, und durch den Kältemittel, das aus dem Wärmespeicher-Wärmetauscher ausgeströmt ist, in den Wärmeübertragungskreislauf strömt, und
wobei in einem Fall, in dem der zweite Erwärmungs-und-Entfrostungsbetrieb durchgeführt wird, die Steuereinheit (500) eingerichtet ist, die erste Öffnungs-und-Schließeinheit (7A) und die zweite Öffnungs-und-Schließeinheit (8A), die in der ersten Wärmequelleneinheit enthalten sind, in einen geschlossenen Zustand zu bringen, die erste Öffnungs-und-Schließeinheit (7B) und die zweite Öffnungs-und-Schlie-βeinheit (8B), die in der zweiten Wärmequelleneinheit enthalten sind, in einen offenen Zustand zu bringen, das wärmequellenseitige Expansionsventil (4B) der zweiten Wärmequelleneinheit in einen vollständig geschlossenen Zustand zu bringen, und die Strömungsschalteinheit einzustellen, so dass ein Strömungsdurchlass gebildet wird, durch den ein Teil des Kältemittels, das aus dem Innen-Expansionsventil ausgeströmt ist, durch das Wärmespeicher-Expansionsventil in den Wärmespeicher-Wärmetauscher strömt, und durch den Kältemittel, das aus dem Wärmespeicher-Wärmetauscher ausgeströmt ist, in den Wärmeübertragungskreislauf strömt.

3. Klimaanlage nach Anspruch 1 oder Anspruch 2,
wobei in einem Fall, in dem der erste Erwärmungs-und-Entfrostungsbetrieb durchgeführt wird, die Steuereinheit (500) eingerichtet ist, das wärmequellenseitige Expansionsventil (4B) der zweiten Wärmequelleneinheit zu steuern, so dass sich ein Überhitzungsgrad an einem Einlass des Sammlers (6B) der zweiten Wärmequelleneinheit einem Zielwert nähert, und
wobei in einem Fall, in dem der zweite Erwärmungs-und-Entfrostungsbetrieb durchgeführt wird, die Steuereinheit (500) eingerichtet ist, das wärmequellenseitige Expansionsventil (4A) der ersten Wärmequelleneinheit zu steuern, so dass sich ein Überhitzungsgrad an einem Einlass des Sammlers (6A) der ersten Wärmequelleneinheit einem Zielwert nähert.

4. Klimaanlage nach einem der Ansprüche 1 bis 3,
wobei in einem Fall, in dem der Erwärmungs-und-Wärmespeicherbetrieb durchgeführt wird, die Steuereinheit (500) eingerichtet ist, das Wärmespeicher-Expansionsventil zu steuern, so dass sich ein Unterkühlungsgrad an einem Auslass des Wärmespeicher-Wärmetauschers einem Zielwert nähert, und
wobei die Steuereinheit (500) eingerichtet ist, einen Zielwert des Unterkühlungsgrads, wenn eine Außentemperatur eine erste Temperatur ist, auf einen Wert einzustellen, der kleiner ist als ein Zielwert des Unterkühlungsgrads, wenn eine Außentemperatur eine zweite Temperatur ist, die höher ist als die erste Temperatur.

5. Klimaanlage nach einem der Ansprüche 1 bis 4,
wobei in einem Fall, in dem der Erwärmungs-und-Wärmespeicherbetrieb durchgeführt wird, die Steuereinheit (500) eingerichtet ist, das Wärmespeicher-Expansionsventil zu steuern, so dass sich ein Unterkühlungsgrad an einem Auslass des Wärmespeicher-Wärmetauschers einem Zielwert nähert, und
wobei die Steuereinheit (500) eingerichtet ist, einen Zielwert des Unterkühlungsgrads, wenn eine Erwärmungslast der Inneneinheit ein erster Wert ist, auf einen Wert einzustellen, der kleiner ist als ein Zielwert des Unterkühlungsgrads, wenn eine Erwärmungslast der Inneneinheit ein zweiter Wert ist, der kleiner ist als der erste Wert.

## Revendications

1. Appareil de climatisation comprenant :
un réservoir de stockage de la chaleur ; un matériau de stockage de la chaleur;
une pluralité d'unités sources de chaleur (100, 200), chacune d'elles incluant un compresseur (1A, 1B), une soupape à quatre voies (3A, 3B), une soupape d'expansion du côté source de chaleur (4A, 4B), un échangeur de chaleur du côté source de chaleur (5A, 5B), et un accumulateur (6A, 6B), et connectées en parallèle les unes aux autres ;
au moins une unité intérieure (400) incluant un échangeur de chaleur intérieur (12) et une soupape d'expansion intérieure (13) ;
un circuit principal (30) dans lequel les compresseurs (1A, 1B), les soupapes à quatre voies (3A, 3B), l'échangeur de chaleur intérieur (12), la soupape d'expansion intérieure (13), les soupapes d'expansion du côté source de chaleur (4A, 4B), les échangeurs de chaleur du côté source de chaleur (5A, 5B), et les accumulateurs (6A, 6B), sont disposés en cercle ;
où l'appareil de climatisation comprend en outre :
un circuit de stockage de la chaleur (40) connecté au circuit principal en parallèle avec l'échangeur de chaleur intérieur (12) et la soupape d'expansion intérieure (13), et incluant une unité de commutation de flux (9), un échangeur de chaleur de stockage de chaleur (10) prévu dans le réservoir de stockage de la chaleur avec le matériau de stockage de la chaleur, et échangeant la chaleur avec le matériau de stockage de la chaleur, et une soupape d'expansion de stockage de la chaleur (11) ;
un circuit de transfert de la chaleur (50) connectant l'unité de commutation de flux (9) et un côté entrée de chaque accumulateur (6A, 6B) de la pluralité d'unités sources de chaleur (100, 200), et incluant une première unité d'ouverture et de fermeture (7A, 7B) prévue pour chacune de la pluralité d'unités sources de chaleur (100, 200) ; et
une pluralité de circuits de dérivation des gaz chauds (60A, 60B), chacun d'eux étant prévu pour chacune de la pluralité d'unités sources de chaleur (100, 200), et chacun d'eux connectant un côté évacuation de chaque compresseur (1A, 1B) et un point situé entre chaque soupape d'expansion du côté source de chaleur (4A, 4B) et l'échangeur de chaleur du côté source de chaleur correspondant (5A, 5B), et chacun d'eux incluant une seconde unité d'ouverture et de fermeture (8A, 8B) ;
une pluralité de capteurs de haute pression (21A, 21B), chacun d'eux étant prévu pour chacune de la pluralité d'unités sources de chaleur, et configuré pour détecter une pression du fluide frigorigène évacué hors du compresseur (1A, 1B) ;
une pluralité de capteurs de basse pression (22A, 22B), chacun d'eux étant prévu pour chacune de la pluralité d'unités sources de chaleur, et configuré pour détecter une pression du fluide frigorigène aspiré par le compresseur (1A, 1B) ;
une pluralité de capteurs de température d'évacuation (23A, 23B), chacun d'eux étant prévu pour chacune de la pluralité d'unités sources de chaleur, et configuré pour détecter une température du fluide frigorigène évacué hors du compresseur (1A, 1B) ;
une pluralité de capteurs de température d'aspiration (24A, 24B), chacun d'eux étant prévu pour chacune de la pluralité d'unités sources de chaleur, et configuré pour détecter une température du fluide frigorigène aspiré par le compresseur (1A, 1B) ;
un premier capteur de température (25) configuré pour détecter une température du fluide frigorigène qui circule entre l'échangeur de chaleur intérieur (12) et la soupape d'expansion intérieure (13) ;
un second capteur de température (26) configuré pour détecter une température du fluide frigorigène qui circule entre l'échangeur de chaleur de stockage de la chaleur (10) et la soupape d'expansion de stockage de la chaleur (11) ; et
une unité de commande (500) configurée pour commander les actions des compresseurs (1A, 1B), des soupapes à quatre voies (3A, 3B), des soupapes d'expansion du côté source de chaleur (4A, 4B), des premières unités d'ouverture et de fermeture (7A, 7B), des secondes unités d'ouverture et de fermeture (8A, 8B), de l'unité de commutation de flux (9), de la soupape d'expansion de stockage de la chaleur (11), et de la soupape d'expansion intérieure (13) sur la base de signaux détectés par les capteurs de haute pression (21A, 21B), les capteurs de basse pression (22A, 22B), les capteurs de température d'évacuation (23A, 23B), les capteurs de température d'aspiration (24A, 24B), le premier capteur de température (25), et le second capteur de température (26),
l'unité de commande (500) est configurée pour exécuter
une opération de chauffage et de stockage de la chaleur dans laquelle une opération de chauffage est exécutée où l'échangeur de chaleur intérieur (12) et l'échangeur de chaleur de stockage de la chaleur (10) sont amenés chacun à fonctionner en tant que condenseurs, et les échangeurs de chaleur du côté source de chaleur (5A, 5B) sont amenés chacun à fonctionner en tant qu'évaporateurs, et dans laquelle la chaleur est stockée dans le matériau de stockage de la chaleur,
une première opération de chauffage et de dégivrage dans laquelle une opération de chauffage est exécutée où l'échangeur de chaleur du côté source de chaleur (5A) d'une première unité source de chaleur (100) parmi la pluralité d'unités sources de chaleur (100, 200) et l'échangeur de chaleur intérieur (12) sont amenés chacun à fonctionner en tant que condenseurs, et l'échangeur de chaleur du côté source de chaleur (5B) d'une deuxième unité source de chaleur (200) parmi la pluralité d'unités sources de chaleur (100, 200) et l'échangeur de chaleur de stockage de la chaleur (12) sont amenés chacun à fonctionner en tant qu'évaporateurs, et dans laquelle la chaleur est transférée à partir du matériau de stockage de la chaleur et une opération de dégivrage de la première unité source de chaleur (100) est exécutée, et
une seconde opération de chauffage et de dégivrage dans laquelle une opération de chauffage est exécutée où l'échangeur de chaleur du côté source de chaleur (5B) de la deuxième unité source de chaleur (200) et l'échangeur de chaleur intérieur (12) sont amenés chacun à fonctionner en tant que condenseurs, et l'échangeur de chaleur du côté source de chaleur (5A) de la première unité source de chaleur (100) et l'échangeur de chaleur de stockage de la chaleur (10) sont amenés chacun à fonctionner en tant qu'évaporateurs, et dans laquelle la chaleur est transférée à partir du matériau de stockage de la chaleur et une opération de dégivrage de la deuxième unité source de chaleur (200) est exécutée, et
la première opération de chauffage et de dégivrage et la seconde opération de chauffage et de dégivrage sont exécutées séquentiellement, l'opération de chauffage et de stockage de la chaleur étant intercalée entre celles-ci.

2. Appareil de climatisation selon la revendication 1,
où, dans un cas où l'opération de chauffage et de stockage de la chaleur est exécutée, l'unité de commande (500) est configurée pour placer toutes les premières unités d'ouverture et de fermeture, et toutes les secondes unités d'ouverture et de fermeture dans un état fermé, et pour régler l'unité de commutation de flux de telle sorte que soit formé un passage de flux à travers lequel une partie du fluide frigorigène évacué hors des compresseurs circule dans l'échangeur de chaleur de stockage de la chaleur, et à travers lequel le fluide frigorigène qui a circulé hors de l'échangeur de chaleur de stockage de la chaleur et qui est passé à travers la soupape d'expansion de stockage de la chaleur circule dans les soupapes d'expansion du côté source de chaleur,
où, dans un cas où la première opération de chauffage et de dégivrage est exécutée, l'unité de commande (500) est configurée pour placer la première unité d'ouverture et de fermeture (7A) et la seconde unité d'ouverture et de fermeture (8A) incluses dans la première unité source de chaleur dans un état ouvert, pour placer la soupape d'expansion du côté source de chaleur (4A) de la première unité source de chaleur dans un état totalement fermé, pour placer la première unité d'ouverture et de fermeture (7B) et la seconde unité d'ouverture et de fermeture (8B) incluses dans la deuxième unité source de chaleur dans un état fermé, et pour régler l'unité de commutation de flux de telle sorte que soit formé un passage de flux à travers lequel une partie du fluide frigorigène qui a circulé hors de la soupape d'expansion intérieure circule dans l'échangeur de chaleur de stockage de la chaleur à travers la soupape d'expansion de stockage de la chaleur, et à travers lequel le fluide frigorigène qui a circulé hors de l'échangeur de chaleur de stockage de la chaleur circule dans le circuit de transfert de la chaleur, et
où, dans un cas où la seconde opération de chauffage et de dégivrage est exécutée, l'unité de commande (500) est configurée pour placer la première unité d'ouverture et de fermeture (7A) et la seconde unité d'ouverture et de fermeture (8A) incluses dans la première unité source de chaleur dans un état fermé, pour placer la première unité d'ouverture et de fermeture (7B) et la seconde unité d'ouverture et de fermeture (8B) incluses dans la deuxième unité source de chaleur dans un état ouvert, pour placer la soupape d'expansion du côté source de chaleur (4B) de la deuxième unité source de chaleur dans un état totalement fermé, et pour régler l'unité de commutation de flux de telle sorte que soit formé un passage de flux à travers lequel une partie du fluide frigorigène qui a circulé hors de la soupape d'expansion intérieure circule dans l'échangeur de chaleur de stockage de la chaleur à travers la soupape d'expansion de stockage de la chaleur, et à travers lequel le fluide frigorigène qui a circulé hors de l'échangeur de chaleur de stockage de la chaleur circule dans le circuit de transfert de la chaleur.

3. Appareil de climatisation selon la revendication 1 ou la revendication 2,
où, dans un cas où la première opération de chauffage et de dégivrage est exécutée, l'unité de commande (500) est configurée pour commander la soupape d'expansion du côté source de chaleur (4B) de la deuxième unité source de chaleur de telle sorte qu'un degré de surchauffe au niveau d'une entrée de l'accumulateur (6B) de la deuxième unité source de chaleur approche une valeur cible, et
où, dans un cas où la seconde opération de chauffage et de dégivrage est exécutée, l'unité de commande (500) est configurée pour commander la soupape d'expansion du côté source de chaleur (4A) de la première unité source de chaleur de telle sorte qu'un degré de surchauffe au niveau d'une entrée de l'accumulateur (6A) de la première unité source de chaleur approche une valeur cible.

4. Appareil de climatisation selon l'une quelconque des revendications 1 à 3,
où, dans un cas où l'opération de chauffage et de stockage de la chaleur est exécutée, l'unité de commande (500) est configurée pour commander la soupape d'expansion de stockage de la chaleur de telle sorte qu'un degré de sous-refroidissement au niveau d'une sortie de l'échangeur de chaleur de stockage de la chaleur approche une valeur cible, et
où l'unité de commande (500) est configurée pour régler une valeur cible du degré de sous-refroidissement lorsque la température extérieure est une première température, à une valeur inférieure à la valeur cible du degré de sous-refroidissement lorsque la température extérieure est une seconde température supérieure à la première température.

5. Appareil de climatisation selon l'une quelconque des revendications 1 à 4,
où, dans un cas où l'opération de chauffage et de stockage de la chaleur est exécutée, l'unité de commande (500) est configurée pour commander la soupape d'expansion de stockage de la chaleur de telle sorte qu'un degré de sous-refroidissement au niveau d'une sortie de l'échangeur de chaleur de stockage de la chaleur approche une valeur cible, et
où l'unité de commande (500) est configurée pour régler une valeur cible du degré de sous-refroidissement lorsqu'une charge thermique de l'unité intérieure est une première valeur, à une valeur inférieure à une valeur cible du degré de sous-refroidissement lorsqu'une charge thermique de l'unité intérieure est une seconde valeur inférieure à la première valeur.
